# EUROPÄISCHE PATENTANMELDUNG

(11) **EP 2 131 019 A1**
(43) Veröffentlichungstag der Anmeldung: **09.12.2009**
(21) Anmeldenummer: 08104257.4
(22) Anmeldetag: 04.06.2008
(51) Int. Cl.: F01N 3/023, F01N 9/00, F01N 3/20, F01N 3/08

(54) **Verfahren zum Betreiben einer Abgasnachbehandlungsanordnung sowie Abgasnachbehandlungsanordnung**

(71) Anmelder: Ford Global Technologies, LLC, Dearborn, MI 48126 (US)
(72) Erfinder: Carberry, Brendan, 52074, Aachen (DE); Yacoub, Yasser Mohammed Sayed, 50858, Köln (DE); Schneider, Matthew, 52064, Aachen (DE); Balenovic, Mario, 5645 KT, Eindhoven (NL)
(74) Vertreter: Drömer, Hans-Carsten

(57) **Zusammenfassung**

Die Erfindung betrifft ein Verfahren zum Betreiben einer Abgasnachbehandlungsanordnung sowie eine Abgasnachbehandlungsanordnung, wobei die Abgasnachbehandlungsanordnung einen Partikelfilter und einen stromaufwärts des Partikelfilters angeordneten Stickoxidspeicher (310, 410) aufweist, wobei wiederholt eine Regeneration des Partikelfilters ausgelöst wird. Ein erfindungsgemäßes Verfahren weist folgende Schritte auf: Ermitteln eines Beladungszustandes des Partikelfilters; Einstellen einer gewünschten NOₓ-Konzentration in dem Stickoxidspeicher (310, 410) in Abhängigkeit von dem Beladungszustand des Partikelfilters; und aktives Auslösen einer NO₂-basierenden Regeneration des Partikelfilters durch Freigabe von in dem Stickoxidspeicher (310, 410) gespeichertem NOₓ.

## Beschreibung

Die vorliegende Erfindung betrifft ein Verfahren zum Betreiben einer Abgasnachbehandlungsanordnung sowie eine Abgasnachbehandlungsanordnung.

Dieselpartikelfilter (DPF) dienen zur Speicherung von Rußpartikeln und müssen regeneriert werden, wenn die Rußbeladung eine Obergrenze erreicht hat. Bei bekannten Verfahren zur Rußregeneration wird zwischen aktiven und passiven Verfahren unterschieden.

Für eine aktive Regeneration wird der Dieselpartikelfilter in Systemen ohne Einsatz von Additiven auf eine vergleichsweise hohe Temperatur (typischerweise über 550 °C) zur Einleitung der Rußverbrennung erwärmt. Zur Aufrechterhaltung der Rußverbrennung ist ein Mindestgehalt an Sauerstoff (typischerweise 3-5 %) erforderlich. Diese Betriebsweise einer sauerstoffbasierenden Rußregeneration wird als aktiver Regenerationsmodus bezeichnet.

Des Weiteren wird eine NO₂-basierende Rußregeneration als passive oder kontinuierliche Regeneration bezeichnet (die entsprechende Vorrichtung wird als kontinuierlich regenerierende Falle, kurz CRT = "Continuous Regenerating Trap" bezeichnet), da diese NO₂-basierende Rußregeneration zumeist während des Beladungszyklus (im mageren Betriebsmodus) erfolgt, wenn die NO₂-Konzentration des in den Partikelfilter einströmenden Gases hoch genug ist und die Filtertemperatur innerhalb eines vorgegebenen Temperaturfensters (typischerweise zwischen 200 °C und 400 °C) liegt. Dieser passive Regenerationsmodus in der Beladungsphase findet somit bei niedrigeren Temperaturen in Abhängigkeit von der NO₂-Konzentration im Abgas und der im Partikelfilter gespeicherten Rußmenge statt.

Somit erfolgt die (NO₂-basierende) passive Regeneration während des Beladungszyklus, wohingegen die (O₂-basierende) aktive Regeneration periodisch eingeleitet bzw. ausgelöst (getriggert) wird. Dabei erfolgt diese Auslösung der aktiven Regeneration seltener in Betriebsphasen mit hoher Drehzahl bzw. Last (da dann die passive Regeneration stattfindet), und häufiger in Betriebsphasen mit geringer Drehzahl bzw. Last, da dann die Rußregeneration allein über die O₂-basierende, aktive Regeneration erfolgt.

Herkömmlicherweise wird die Rußverbrennung zur DPF-Regeneration unter Erhöhung der Abgastemperatur in den Bereich der Rußverbrennung, d.h. 550°C bis 600°C, bei einem Sauerstoffüberschuß im Abgas von wenigstens 3% bis 5% erreicht. Die Reaktion der Rußpartikel mit Sauerstoff kann in Abhängigkeit vom Fahrstil bis zu 20 Minuten dauern, bis die Regeneration des Dieselpartikelfilters vollständig abgeschlossen ist. Wenngleich die Rußverbrennung bei Verwendung katalysierter Filter beschleunigt werden kann, liegen die für die Regeneration erforderlichen Zeiten bzw. Fahrtstrecken in dieser Größenordnung. Es besteht insofern eine Wechselbeziehung zwischen der Schnelligkeit der Regeneration einerseits und der Ölverdünnung sowie Haltbarkeit des Motor/DPF-Systems andererseits, als eine höhere Temperatur zwar zu einer schnelleren Regeneration führt, jedoch auch eine höhere Ölverdünnung zur Folge hat, da zur Erhöhung der Temperatur eine zusätzliche, nachträglich eingespritzte Kraftstoffmenge erforderlich ist. Außerdem kann je nach konkreter Ausgestaltung der Abgasnachbehandlungsvorrichtung, z.B. wenn ein DPF weit entfernt vom Verbrennungsmotor angeordnet ist, der Transport der im Verbrennungsmotor erzeugten Wärme bis zu dem DPF innerhalb der Temperaturgrenzen der übrigen Motorkomponenten (insbesondere unter Berücksichtigung der Turbinentemperatur) problematisch sein.

Aufgrund des periodischen Auftretens des Regenerationserfordernisses kommen diverse Designaspekte hinsichtlich der Abgasnachbehandlungsvorrichtung und des Betriebes des Verbrennungsmotors ins Spiel. Als erstes trägt eine Größenabstimmung des Dieselpartikelfilters dazu bei, die Frequenz der Regenerationsvorgänge basierend auf den Speisegasrußraten des Verbrennungsmotors und bei unterschiedlichen Fahrbedingungen zu bestimmen. Des Weiteren ist es wohlbekannt, dass die Verwendung von Kraftstoffnacheinspritzungsvorgängen zur Erhöhung der Abgastemperaturen den Nebeneffekt hat, dass das Öl in der Ölwanne mit Dieselöl verdünnt wird. Diese Verdünnung kann u. A. zu einer Verschlechterung der Schmiereigenschaften des Öls und zu einem rascheren Motorverschleiß führen, wenn die Ölverdünnung begrenzt wird. Folglich haben die Qualität der Kalibrierung der Motorerwärmung, der Fahrstil des Fahrers (ein Fahren bei niedriger Last ist typischerweise nachteiliger hinsichtlich der Ölverdünnung, da mehr Wärme zur Regeneration erzeugt werden muß) und die Frequenz der Regenerationsvorgänge einen Einfluß auf die Steuerbarkeit des DPF hinsichtlich der einzuhaltenden Grenzwerte und der gewünschten Ölwechselintervalle des Fahrzeuges.

Angesichts der Wechselwirkung zwischen den Anforderungen hinsichtlich der Ölverdünnung einerseits und der DPF-Regeneration andererseits wurde eine zusätzliche Kraftstoffeinspritzung in den Abgasstrom vorgeschlagen, um die Temperaturerhöhung im Abgas vom Verbrennungsmotor zu entkoppeln. Solche Verfahren können zwar zu einer erfolgreichen Entkopplung führen, erfordern jedoch eine zusätzliche Kraftstoffmenge für die DPF-Regeneration. Aus Gründen der Kostenoptimierung ist es ferner günstig, die Größe des Dieselpartikelfilters (als einer kostspieligen Komponente) zu verringern. Dies führt jedoch zu einem häufigeren Regenerationsbedarf, da zwischen den Regenerationsvorgängen eine geringere Rußmenge gespeichert werden kann. Die Hinzunahme eines Abgasstrom-Injektors verringert hierbei die letztendlich erzielte Kostenersparnis.

Insgesamt besteht ein Bedarf, DPF-Systeme effizienter auszugestalten, so dass die zur vollständigen Rußregeneration erforderliche Zeitspanne auf ein Minimum reduziert werden kann.

Aus DE 100 40 554 A1 ist es bekannt, die Rußregeneration eines Partikelfilters durch einen vorgeschalteten Stickoxidspeicher zu unterstützen, indem dieser zuvor mit Stickoxiden beladen wird. Sobald die Abgastemperatur auf über 400°C angehoben wird, gibt der Stickoxidspeicher unter magerer Abgasatmosphäre zusätzliches NOₓ frei, welches einen Rußabbrand im nachgeschalteten Partikelfilter unterstützt.

Es ist eine Aufgabe der vorliegenden Erfindung, ein Verfahren zum Betreiben einer Abgasnachbehandlungsanordnung sowie eine Abgasnachbehandlungsanordnung bereitzustellen, mittels derer eine effektivere Rußverbrennung ermöglicht wird.

Diese Aufgabe wird durch das Verfahren gemäß den Merkmalen des unabhängigen Patentanspruchs 1 bzw. die Vorrichtung gemäß den Merkmalen des unabhängigen Patentanspruchs 7 gelöst.

Ein Verfahren zum Betreiben einer Abgasnachbehandlungsanordnung, wobei die Abgasnachbehandlungsanordnung einen Partikelfilter und einen stromaufwärts des Partikelfilters angeordneten Stickoxidspeicher aufweist, wobei wiederholt eine Regeneration des Partikelfilters ausgelöst wird, weist folgende Schritte auf:
- Ermitteln eines Beladungszustandes des Partikelfilters;
- Einstellen einer gewünschten NOₓ-Konzentration in dem Stickoxidspeicher in Abhängigkeit von dem Beladungszustand des Partikelfilters; und
- aktives Auslösen einer NO₂-basierenden Regeneration des Partikelfilters durch Freigabe von in dem Stickoxidspeicher gespeichertem NOₓ.

Der vorliegenden Erfindung liegt das Konzept zugrunde, eine NO₂-basierende Regeneration mit einer O₂-basierenden Regeneration während einer aktiven Regenerationsphase zu kombinieren. Im Unterschied zu einer passiven Regeneration wird erfindungsgemäß die NO₂-basierende Rußverbrennung aktiv ausgelöst bzw. getriggert.

Gemäß der Erfindung werden Stickoxide (NOₓ) stromaufwärts des Dieselpartikelfilters in einem Stickoxidspeicher gespeichert, woraufhin mittels einer kontrollierten thermischen Desorption (typischerweise bei Temperaturen oberhalb von 300°C) NO₂ freigegeben wird. Infolgedessen kann zumindest in der Anfangsphase der aktiven Regeneration eine Anfangskonzentration an NO₂ im Abgas beim Eintritt in den Stickoxidspeicher aufrechterhalten werden.

Bei Rußbeladungen, welche in der Nähe von Werten liegen, bei denen eine Schädigung des Dieselpartikelfilters eintreten kann, ist die Durchführung einer NO₂-basierenden Regeneration vorteilhaft, da diese bei wesentlich niedrigeren Temperaturniveaus (typischerweise 300 °C) im Vergleich zur O₂-basierenden Regeneration (die bei wenigstens 500 °C auftritt) erfolgt.

Die Höhe der NO₂-Konzentration wird im Wesentlichen über eine Steuerung der Temperatur des Stickoxidspeichers (und somit der Desorptionsrate von NO₂) sowie Steuerung der Massenströmung der Abgase durch den Stickoxidspeicher eingestellt. Hierbei kann die Steuerung der Massenströmung des Abgases durch den Stickoxidspeicher dadurch realisiert werden, dass der Stickoxidspeicher in einer zum Strömungsweg parallelen Bypaßleitung angeordnet wird und ein Steuerventil dazu verwendet wird, die Strömung zwischen dem Hauptabgasstrom und der Bypaßleitung aufzuteilen.

Des Weiteren erfolgt die Einstellung der Höhe der NO₂-Konzentration über die Steuerung des aus dem Verbrennungsmotor austretenden NOₓ-Speisegases (in einfachster Form mittels Steuerung der EGR-Rate, wobei niedrigere EGR-Raten zu höheren NOₓ-Emissionen führen).

Die effizientere Ausgestaltung des DPF-Systems hat den Vorteil, dass kostspielige Abgasstrom-Einspritzsysteme vermieden werden können, ein Anstieg des Kraftstoffverbrauchs bei langwierigen Rußregenerationsvorgängen verhindert und die Abmessung des Dieselpartikelfilters verringert werden kann, da ein günstigerer Kompromiß zwischen der Abmessung des DPF einerseits und der Anzahl der Regenerationsvorgänge, der Ölverdünnung und des Kraftstoffverbrauchs andererseits realisiert werden kann.

Weitere Ausgestaltungen der Erfindung sind der Beschreibung und den Unteransprüchen zu entnehmen.

Die Erfindung wird nachstehend anhand bevorzugter Ausführungsformen unter Bezugnahme auf die beigefügte Abbildung erläutert.

Es zeigen:
- Figur 1-2: Ergebnisse von TGA-Untersuchungen zur Darstellung der Rußverbrennungsrate unter O₂, NO₂ und O₂ + NO₂ mit oder ohne Vorhandensein eines Katalysators;
- Figur 2: eine schematische Darstellung zur Erläuterung unterschiedlicher möglicher Konfigurationen zur Realisierung der Erfindung in Verbindung mit Tabelle 1;
- Figur 3-4: schematische Darstellungen unterschiedlicher möglicher Konfigurationen einer Abgasnachbehandlungsanordnung zur Realisierung der Erfindung;
- Figur 5: ein Diagramm, in welchem eine bei dem erfindungsgemäßen Verfahren ermittelte, gewünschte NO₂-Anfangskonzentration in Abhängigkeit von der Temperatur und der Rußbeladung des Partikelfilters aufgetragen ist.

Bekanntermaßen erfolgt in einem DPF die Rußoxidation in den folgenden beiden Hauptreaktionen:

Reaktion 1: C + O₂ → CO₂

Reaktion 2: C + NO₂ → CO + NO

Während "Reaktion 1" typischerweise bei Temperaturen oberhalb von 500°C von Bedeutung ist, spielt "Reaktion 2" bereits oberhalb von 250°C eine Rolle. Oberhalb von 450°C ist der NO₂-Gehalt im System typischerweise niedriger, was auf eine Verschiebung des Gleichgewichts hin zu NO zurückzuführen ist, so dass für "Reaktion 2" eine abnehmende Bedeutung zu erwarten ist.

Diverse Tests haben jedoch gezeigt, dass die tatsächlichen Vorgänge komplizierter sind. Es gibt zahlreiche Anhaltspunkte dafür, dass das Vorhandensein von Stickoxiden (NOₓ), also nicht notwendigerweise nur NO₂, die Rußumwandlungsrate auch bei höheren Temperaturen verbessert, bei denen typischerweise nur Reaktion 1 erwartet wird.

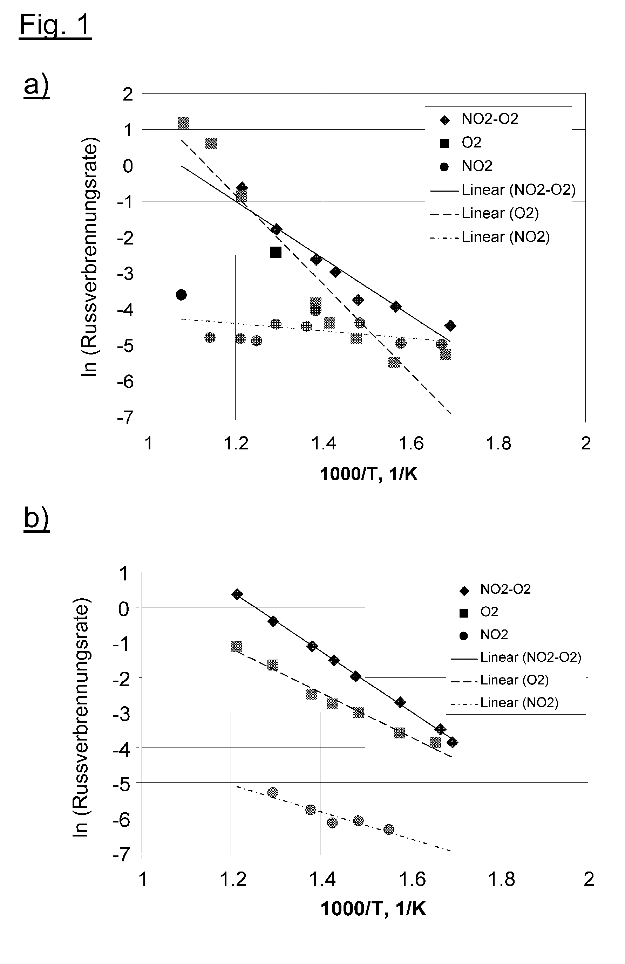

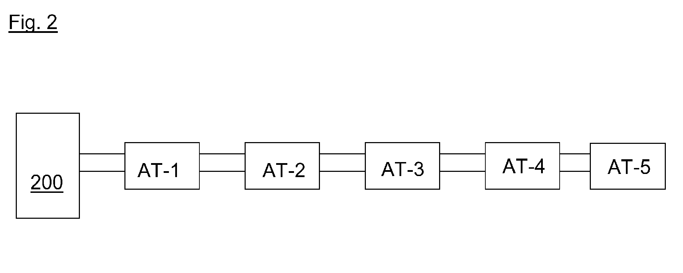

Ein Beispiel ist in Fig. 1 und Fig. 2 dargestellt, in denen die Ergebnisse von TGA-Untersuchungen in Arrhenius-Plots gezeigt sind, wobei die Rußverbrennungsrate unter O₂, NO₂ und O₂ + NO₂ mit oder ohne Vorhandensein eines Katalysators untersucht wurde.

Oberhalb von 550°C führt das Vorhandensein von NO₂ für die unbeschichtete Probe zu keiner Verbesserung der Reaktionsgeschwindigkeit von "Reaktion 1" (d.h. der Reaktion von C + O₂). Für die mit dem Katalysator versehene Probe hat jedoch das NO₂ einen ausgeprägten positiven Einfluß auf die Rußoxidation im gesamten Temperaturbereich, selbst bei Temperaturen oberhalb von 600°C. Ohne O₂ verläuft "Reaktion 2" (d. h. die Reaktion von C + NO₂) in beiden Fällen sehr langsam, woraus deutlich wird, dass "Reaktion 1" und "Reaktion 2" nicht separat voneinander betrachtet werden sollten, sondern als eine Reaktion, wobei ein Vorhandensein von O₂ immer erforderlich ist.

Folglich kann NOₓ als Katalysator angesehen werden, welcher Reaktion 1 (d.h. die Reaktion von C+O₂) unter sämtlichen Betriebsbedingungen bzw. Betriebstemperaturen oberhalb von 250°C erhöht. Folglich sollte bei jedem Regenerationsansatz durch das Design des DPF-Systems sowie die Steuerstrategie eine ausreichende NOₓ-Menge bereitgestellt werden. Es versteht sich, dass die Regeneration bei höheren Temperaturen (oberhalb von 400°C bis 500°C) effizienter ist, wobei dann die Regenerationszeit begrenzt werden kann, um Auswirkungen hinsichtlich Ölverdünnung und Zunahme des Kraftstoffverbrauchs zu minimieren.

Der vorliegenden Erfindung liegt das Konzept zugrunde, eine überschüssige NOₓ-Menge während einer DPF-Regeneration bereitzustellen, um die Dauer der Regeneration zu reduzieren bzw. zu minimieren. Hierzu wird eine Vorrichtung verwendet, welche NOₓ vor der Regeneration des DPF speichert und welche das NOₓ freigibt, wenn die Regeneration aktiviert wird. NOₓ-Adsorber mit diesen gewünschten Merkmalen sind in unterschiedlichen chemischen Zusammensetzungen bekannt:
- NOₓ-Adsorptionsspeicher für den Einsatz bei relativ niedrigen Temperaturen, d.h. im Bereich von 50°C bis 350°C;
- Vorrichtung zur thermischen Desorption von NOₓ bei höheren Temperaturen, d.h. im Bereich oberhalb von 350°C (die tatsächlichen Temperaturgrenzen sind abhängig von der Beschichtung und können je nach Anwendung optimiert werden).

Der NOₓ-Adsorber oder NOₓ-Desorber kann an unterschiedlichen Positionen im System plaziert werden, wie im Weiteren detaillierter erläutert wird, wobei diese Position jeweils entweder auf dem DPF oder stromaufwärts des DPF liegt. Anhand von Fig. 2 und Tabelle 1 werden unterschiedliche, mögliche Konfigurationen dargestellt. Besonders vorteilhaft ist die Erfindung in Konfigurationen, in denen der DPF die letzte Komponente der Abgasnachbehandlungsanordnung darstellt. In diesem Falle ist der DPF weit entfernt vom Verbrennungsmotor angeordnet, so dass es schwierig ist, die für eine O₂-basierende Rußverbrennung erforderlichen Temperaturen zu erreichen.

Ferner ist die Erfindung in Konfigurationen vorteilhaft, in denen der DPF stromabwärts eines SCR-Katalysators angeordnet ist, da dann aufgrund der hohen Effizienz des SCR-Katalysators nur noch eine schwache passive Regeneration im DPF erfolgt. In diesem Falle kann mittels der Verwendung eines Stickoxidspeichers, welcher langsam mit den durch den SCR-Katalysator hindurch gelangten Stickoxiden angereichert wird, eine Freigabe der Stickoxide zur maximalen Nutzung bei der Rußverbrennung erfolgen. Dabei hat der Stickoxidspeicher den weiteren Vorteil, dass aus dem SCR-Katalysator entweichendes NH₃ ebenfalls in NOₓ, welches bei der Rußverbrennung genutzt wird, umgewandelt werden kann.

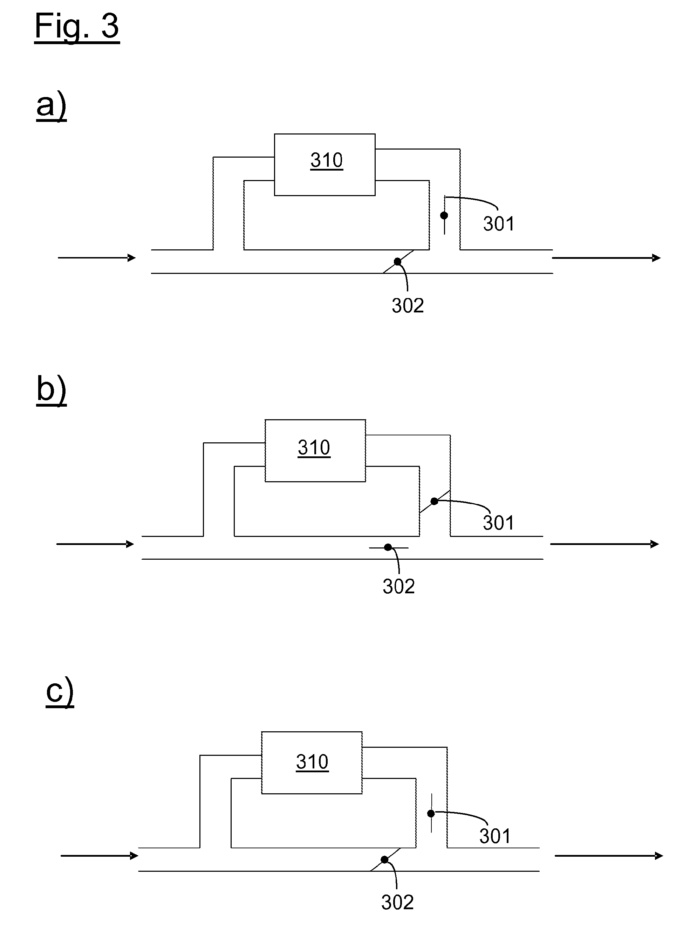

Zur optimierten Ansammlung und anschließenden Freigabe kann ein Stickoxidspeicher gemäß Fig. 3a-c in einer zur Hauptströmungsleitung parallelen, sekundären Bypaßleitung angeordnet sein, wobei die Steuerung der Massenströmung durch den Stickoxidspeicher mittels aktiv gesteuerter Ventile 301, 302 zur Aufteilung der Abgasströmung zwischen der Hauptströmungsleitung und der Bypaßleitung erfolgt. Hierbei werden zunächst gemäß Fig. 3a während der Beladung des Stickoxidspeichers 310 die Stickoxide durch den Stickoxidspeicher 310 hindurchgeleitet. Eine Umlenkung vorbei an dem Stickoxidspeicher 310 erfolgt gemäß Fig. 3b bei vollständig beladenem Stickoxidspeicher 310 oder in einem Temperaturbereich, in dem eine NOₓ-Desorption erfolgt. Eine erneute Durchströmung des Stickoxidspeichers 310 erfolgt gemäß Fig. 3c während einer Regeneration des DPF (entweder zu deren Beginn oder wenn die Temperatur des DPF einen vorbestimmten Minimalwert erreicht hat), um eine optimale Rußverbrennung zu erzielen.

Das Verfahren ist besonders vorteilhaft, wenn es sich bei dem Stickoxidspeicher nicht um einen Adsorptions-/Reduktions-Katalysator handelt, sondern um einen Adsorptions-Katalysator mit thermischer Desorption, da dann die Speicherung von Stickoxiden optimiert wird. Im Falle der Ausgestaltung als LNT-Katalysator kann dieser Platingruppen-Metalle wie Platin (Pt) oder Palladium (Pd) und/oder Rhodium (Rh) sowie einen metallischen Washcoat z. B. aus Barium aufweisen. Die Verwendung nichtmetallischer Washcoats (z. B. auf Basis von Aluminiumoxid) ist ebenfalls möglich und insofern vorteilhaft, als keine ausgeprägte Ablagerung von Schwefel stattfindet und somit keine aktive Entschwefelung erforderlich ist, weil eine thermische Desorption von gespeichertem Schwefel bereits bei normalen Regenerationstemperaturen stattfindet.

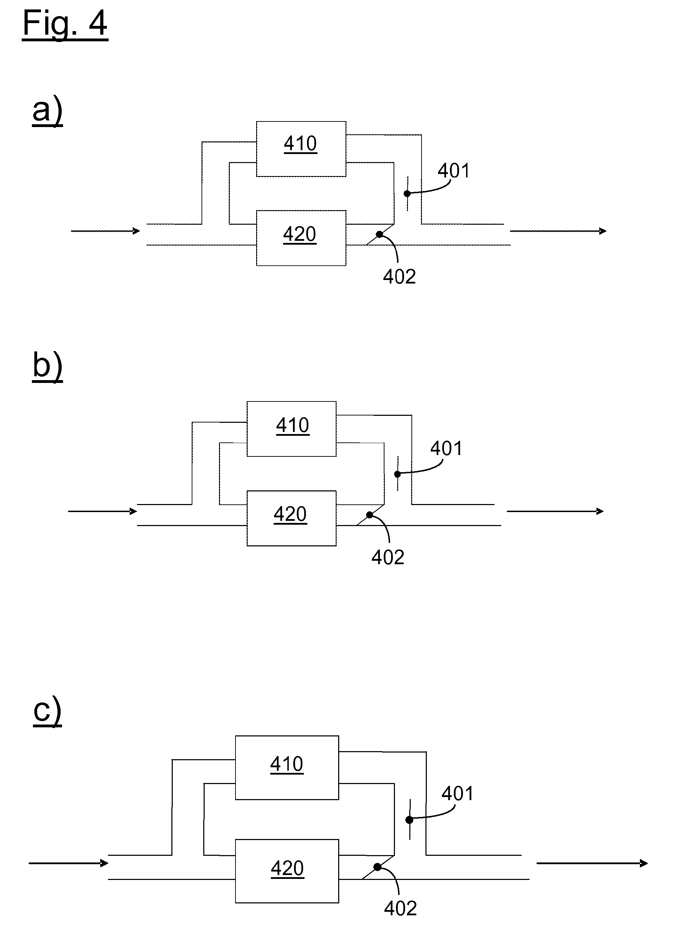

Fig. 4a-c zeigen analoge Einstellungen in einer Anordnung, in welcher in der Haupströmungsleitung (d. h. parallel zu dem in der Bypaßleitung angeordneten Stickoxidspeicher 410) ein SCR-Katalysator 420 angeordnet ist.

Wenn die Temperaturgrenze für die NOₓ-Desorption erreicht ist, erfolgt eine ausgeprägte NOₓ-Freisetzung, und zwar typischerweise bei Temperaturen, welche die DPF-Regeneration ermöglichen. Der DPF "sieht" somit eine wesentlich höhere NOₓ-Konzentration infolge der Desorption, als er im Normalbetrieb ohne NOₓ-Adsorptionsvorrichtung sehen würde, so dass die Rußverbrennungsrate wesentlich verbessert wird. Da außerdem die Rußverbrennung bereits bei Temperaturen unterhalb von 600°C ausgeprägt ist und diese Reaktion sich ausbreitet, besteht ein wesentlich geringeres Risiko einer Überhitzung des Systems, da zum Zeitpunkt, zu dem Temperaturen oberhalb von 600°C erreicht worden sind, bereits ein großer Anteil an Rußpartikeln umgewandelt worden ist. Insofern wird der DPF besser geschützt, und die maximale Rußbeladung des DPF kann erhöht werden, was vorteilhaft hinsichtlich einer Minimierung der Ölverdünnung und einer Maximierung der Kraftstoffersparnis ist.

**Tabelle 1:**

| **Konfiguration** | **AT-1** | **AT-2** | **AT-3** | **AT-4** | **AT-5** |
|---|---|---|---|---|---|
| 1 | DPF mit Stickoxidspeicherbeschichtung | | | | |
| 2 | Stickoxidspeicher | DPF | | | |
| 3 | DOC | DPF mit Stickoxidspeicherbeschichtung | | | |
| 4 | DOC | Stickoxidspeicher | DPF | | |
| 5 | LNT | DPF mit Stickoxidspeicherbeschichtung | | | |
| 6 | LNT | Stickoxidspeicher | DPF | | |
| 7 | DOC | LNT | DPF mit Stickoxidspeicherbeschichtung | | |
| 8 | DOC | LNT | Stickoxidspeicher | DPF | |
| 9 | DOC | SCR | DPF mit Stickoxidspeicherbeschichtung | | |
| 10 | DOC | SCR | Stickoxidspeicher | DPF | |
| 11 | DOC | SCR | Stickoxidspeicher | DPF mit Stickoxidspeicherbeschichtung | |
| 12 | DOC | NOₓ-Absorber | SCR | DPF mit Stickoxidspeicherbeschichtung | |
| 13 | DOC | NOₓ-Absorber | SCR | Stickoxidspeicher | DPF mit Stickoxidspeicherbeschichtung |
| 14 | DOC | NOₓ-Absorber | SCR | Stickoxidspeicher | DPF |
| 15 | DOC | DPF mit Stickoxidspeicherbeschichtung | SCR | | |
| 16 | DOC | Stickoxidspeicher | DPF | SCR | |
| 17 | DOC | Stickoxidspeicher | DPF mit Stickoxidspeicherbeschichtung | SCR | |
| 18 | DOC | NOₓ-Absorber | DPF mit Stickoxidspeicherbeschichtung | SCR | |

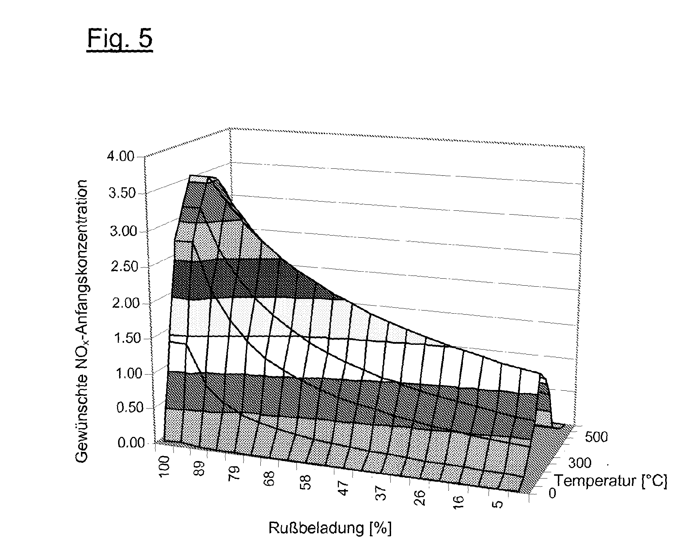

Im Weiteren wird eine Implementierung einer erfindungsgemäßen Strategie zur Steuerung der Regeneration eines Dieselpartikelfilters unter Bezugnahme auf Fig. 5 erläutert.

Zunächst erfolgt die Abfrage, ob eine Regenerationsanforderung vorliegt. Falls dies der Fall ist, wird die erforderliche Menge an gespeichertem NOₓ als Funktion der im Partikelfilter gespeicherten Rußmenge und der Filtertemperatur anhand von Fig. 5 ermittelt. Wie aus Fig. 5 ersichtlich ist, ist für eine höhere Rußmenge eine höhere Anfangsmenge an gespeichertem NOₓ wünschenswert. Des Weiteren wird bei sehr niedrigen Temperaturen der Sollwert der Anfangsmenge von gespeichertem NOₓ auf einen geringen Wert gesetzt, da dann die Speicherkapazität der NOₓ-Falle typischerweise gering ist. Bei höheren Temperaturen wird der Sollwert für die NOₓ-Beladung ebenfalls auf einen niedrigen Wert gesetzt, da wegen der bestehenden Möglichkeit zur Durchführung einer O₂-basierenden Regeneration (aufgrund der hohen Filtertemperatur im Mager-Modus) der Bedarf nach einer NO₂-basierenden Regeneration niedrig ist.

Wenn eine O₂-basierende Regeneration erforderlich ist, da die erforderliche Menge an gespeichertem NOₓ gleich Null ist, erfolgt eine herkömmliche Regeneration.

Anderenfalls werden zur Durchführung einer NO₂-basierenden Regeneration auf Basis der tatsächlichen und der gewünschten Menge an gespeichertem NOₓ folgende Schritte durchgeführt:
- Berechnen der Speicherkapazität des Stickoxidspeichers (in Funktion der Gasgeschwindigkeit und der Temperatur des Stickoxidspeichers); und
- Berechnen der gewünschten sowie der tatsächlichen gespeicherten NOₓ-Beladung;

Wenn die gewünschte NOₓ-Beladung (in %) oberhalb eines Schwellenwertes (z. B. 100 %) liegt, werden folgende Schritte durchgeführt:
- Aktivieren eines Aufheizmodus, wenn die Temperatur des Stickoxidspeichers niedrig ist (z. B. unterhalb von 200 °C), bis die gewünschte NOₓ-Beladung unterhalb eines Schwellenwertes (z.B. 40 % bis 70 %) liegt;
- Aktivieren eines Mager-Modus, wenn die Temperatur des Stickoxidspeichers hoch ist (z. B. oberhalb von 400 °C), bis die gewünschte NOₓ-Beladung unterhalb eines Schwellenwertes (40 % bis 80 %) liegt;
- Verbleib in dem jeweiligen Modus zur Beladung des Stickoxidspeichers und Ermitteln des Bedarfs (basierend auf der Differenz zwischen gewünschter und tatsächlicher prozentualer NOₓ-Beladung) nach einer Erhöhung des vom Verbrennungsmotor zuströmenden NOₓ-Gases, bis die gespeicherte NOₓ-Beladung größer oder gleich dem gewünschten Anfangszustand (gemäß Fig. 5) ist oder bis ein Zeitdauer-Schwellenwert überschritten ist.

Wenn die in dem Stickoxidspeicher gespeicherte NOₓ-Menge oberhalb der gewünschten Beladung liegt, werden folgende Schritte durchgeführt:
- Berechnen der gewünschten Konzentration im Abgas am Eingang in den Dieselpartikelfilter als Funktion der aktuellen DPF-Temperatur und der Rate der exothermen, NO₂-basierenden Rußreaktion (die vorhergesagte Temperatur sollte innerhalb kalibrierbarer Schwellenwerte liegen);
- Berechnen der gewünschten Temperatur der NOₓ-Falle basierend auf der tatsächlichen NOₓ-Konzentration in dem vom Ausgang des Verbrennungsmotors zugeführten Speisegas und der gewünschten Konzentration, die wie oben ausgeführt berechnet wurde; und
- Aktivieren eines Mager/Aufheiz-Modus, der zum Erreichen der gewünschten Temperatur der NOₓ-Falle erforderlich ist. Anschließend erfolgt erneut die Abfrage, ob eine Regenerationsanforderung vorliegt.

## Patentansprüche

1. Verfahren zum Betreiben einer Abgasnachbehandlungsanordnung, wobei die Abgasnachbehandlungsanordnung einen Partikelfilter und einen stromaufwärts des Partikelfilters angeordneten Stickoxidspeicher (310, 410) aufweist, wobei wiederholt eine Regeneration des Partikelfilters ausgelöst wird,
**dadurch gekennzeichnet, dass**
das Verfahren folgende Schritte aufweist:
Ermitteln eines Beladungszustandes des Partikelfilters;
Einstellen einer gewünschten NOₓ-Konzentration in dem Stickoxidspeicher (310, 410) in Abhängigkeit von dem Beladungszustand des Partikelfilters; und
aktives Auslösen einer NO₂-basierenden Regeneration des Partikelfilters durch Freigabe von in dem Stickoxidspeicher gespeichertem NOₓ.

2. Verfahren nach Anspruch 1,
**dadurch gekennzeichnet, dass**
die Steuerung der NOₓ-Konzentration in dem Stickoxidspeicher (310, 410) wenigstens eine der folgenden Maßnahmen umfaßt:
Steuerung der Temperatur des Stickoxidspeichers (310, 410);
Steuerung der Massenströmung durch den Stickoxidspeicher (310, 410); und
Steuerung einer Abgasrückführungsrate.

3. Verfahren nach Anspruch 2,
**dadurch gekennzeichnet, dass**
der Stickoxidspeicher (310, 410) in einer zur Hauptströmungsleitung parallelen Bypaßleitung angeordnet ist, wobei die Steuerung der Massenströmung durch den Stickoxidspeicher (310, 410) mittels Aufteilung der Abgasströmung zwischen der Hauptströmungsleitung und der Bypaßleitung erfolgt.

4. Verfahren nach einem der vorhergehenden Ansprüche,
**dadurch gekennzeichnet, dass**
wenn die gewünschte NOₓ-Konzentration in dem Stickoxidspeicher (310, 410) oberhalb eines Schwellenwertes liegt, wenigstens einer der folgenden Schritte durchgeführt wird:
- Aktivieren eines Aufheizmodus zum Aufheizen des Stickoxidspeichers (310, 410), wenn die Temperatur des Stickoxidspeichers (310, 410) unterhalb eines ersten Temperatur-Schwellenwertes liegt, bis die gewünschte NOₓ-Beladung unterhalb eines Schwellenwertes liegt;
- Aktivieren eines Mager-Modus, wenn die Temperatur des Stickoxidspeichers (310, 410) oberhalb eines zweiten Temperatur-Schwellenwertes liegt, bis die gewünschte NO₂-Konzentration unterhalb eines Schwellenwertes liegt;
- Beladung des Stickoxidspeichers (310, 410), bis die gespeicherte NOₓ-Konzentration größer oder gleich der gewünschten NOₓ-Konzentration ist oder bis ein Zeitdauer-Schwellenwert überschritten ist.

5. Verfahren nach einem der Ansprüche 1 bis 4,
**dadurch gekennzeichnet, dass**
dieses ferner den Schritt aufweist:
Erhöhen der Menge des vom Verbrennungsmotor zuströmenden NOₓ-Gases basierend auf der Differenz zwischen gewünschter und tatsächlicher NOₓ-Konzentration des Stickoxidspeichers (310, 410).

6. Verfahren nach einem der vorhergehenden Ansprüche,
**dadurch gekennzeichnet, dass**
wenn die in dem Stickoxidspeicher (310, 410) gespeicherte NOₓ-Konzentration oberhalb der gewünschten Beladung liegt, folgende Schritte durchgeführt werden:
- Berechnen der gewünschten NOₓ-Konzentration im Abgas am Eingang des Partikelfilters als Funktion der aktuellen Temperatur des Partikelfilters und der Reaktionsrate der exothermen, NO₂-basierenden Rußreaktion im Partikelfilter;
- Berechnen der gewünschten Temperatur des Stickoxidspeichers (310, 410) basierend auf der tatsächlichen NOₓ-Konzentration in dem vom Verbrennungsmotor zugeführten Speisegas und der gewünschten Konzentration am Eingang des Partikelfilters; und
- Aktivieren eines Mager/Aufheiz-Modus, der zum Erreichen der gewünschten Temperatur des Stickoxidspeichers (310, 410) erforderlich ist.

7. Abgasnachbehandlungsanordung, welche eine Partlikelfilter und einen stromaufwärts des Partikelfilters angeordneten Stickoxidspeicher (310, 410) aufweist,
**dadurch gekennzeichnet, dass**
die Abgasnachbehandlungsanordnung dahingehend ausgebildet ist, ein Verfahren nach einem der vorhergehenden Ansprüche durchzuführen.

8. Abgasnachbehandlungsanordnung nach Anspruch 7,
**dadurch gekennzeichnet, dass**
der Stickoxidspeicher (310, 410) in einer zur Hauptströmungsleitung parallelen Bypaßleitung angeordnet ist.

9. Abgasnachbehandlungsanordnung nach Anspruch 7 oder 8,
**dadurch gekennzeichnet, dass**
in der Hauptströmungsleitung ein SCR-Katalysator (420) angeordnet ist.
